(19) Europäisches Patentamt
European Patent Office
Office européen des brevets

(11) **EP 2 942 565 A1**

(12) **EUROPÄISCHE PATENTANMELDUNG**

(43) Veröffentlichungstag:
**11.11.2015 Patentblatt 2015/46**

(51) Int Cl.:
***F23N 5/16*** *(2006.01)*      ***F23N 5/02*** *(2006.01)*
***F02C 9/28*** *(2006.01)*      ***F02C 9/48*** *(2006.01)*

(21) Anmeldenummer: **14166969.7**

(22) Anmeldetag: **05.05.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
 • **Deuker, Eberhard**
  **45481 Mülheim an der Ruhr (DE)**
 • **Kock, Boris Ferdinand**
  **40878 Ratingen (DE)**
 • **Simon, Dieter**
  **45473 Mülheim an der Ruhr (DE)**

(54) **Verfahren zum Betreiben einer Brenneranordnung**

(57) Die Erfindung betrifft ein Verfahren zum Betreiben einer Brenneranordnung, insbesondere einer Brenneranordnung einer Gasturbine, bei dem eine die Verbrennungsstabilität repräsentierenden Bewertungsgröße ermittelt und zumindest basierend auf der ermittelten Bewertungsgröße wenigstens eine Stellgröße verändert wird, wenn die ermittelte Bewertungsgröße nicht innerhalb eines vorab definierten Sollbereiches liegt, wobei der Sollbereich der Bewertungsgröße über den gesamten Leistungsbereich der Maschine konstant ist.

EP 2 942 565 A1

**Beschreibung**

Die vorliegende Erfindung betrifft ein Verfahren zum Betreiben einer Brenneranordnung, insbesondere einer Brenneranordnung einer Gasturbine, bei dem eine die Verbrennungsstabilität repräsentierenden Bewertungsgröße ermittelt und zumindest basierend auf der ermittelten Bewertungsgröße wenigstens eine Stellgröße verändert wird.

Beim Betrieb einer Gasturbinenanlage gilt es neben der Einhaltung von Leistung, Wirkungsgrad und Emissionsgrenzwerten vor allem darum, die Verbrennungsstabilität in einem sicheren Betriebsbereich zu halten. Unter Verbrennungsstabilität wird vorliegend das thermo-akustische Verhalten der Kombination aus Brennern und Brennkammern verstanden. So kann es durch Anregung thermo-akustischer Moden zu starken Wechselwirkungen in der Brennkammer kommen, die mechanischen Schaden an der Maschine bewirken können. Entsprechend gilt es Frequenzbänder zu meiden, in denen schädliche maximale Amplituden auftreten. In diesem Zusammenhang kommen in jüngster Vergangenheit immer häufiger geschlossene Regelkreise zum Einsatz, die darauf abzielen, kritische Frequenzbänder zu verhindern und auf diese Weise das thermo-akustische Verhalten zu kontrollieren. Die kritischen Frequenzbänder werden hierzu in separaten Regelkreisen überwacht, die in einem Regler zusammengefasst sind. Als Stellgrößen dienen vor allem der der Brenneranordnung zugeführte Gesamtbrennstoffvolumenstrom, die Aufteilung des Gesamtbrennstoffvolumenstroms auf einzelne Brennerstufen der Brenneranordnung und die Positionierung verstellbarer Vorleitschaufeln der Brenneranordnung, um nur einige Beispiele zu nennen. Ein Nachteil derartiger Regelungen besteht allerdings darin, dass ein Vorsehen mehrerer Regelkreise mit hohen Kosten einhergeht. Darüber hinaus variieren die kritischen Frequenzbänder in Abhängigkeit von den Leistungsbereichen der Brenneranordnung. Frequenzbänder, die in einem ersten Leistungsbereich keinen nennenswerten Einfluss auf die Verbrennungsstabilität nehmen, können sich in einem anderen Leistungsbereich negativ auf diese auswirken und umgekehrt. Entsprechend können unterschiedliche Regelziele miteinander konkurrieren, wenn verschiedene Frequenzen in demselben Leistungsbereich auftreten und die Abhilfe-Maßnahmen bzw. Stellgrößen unterschiedlich sind.

Ausgehend von diesem Stand der Technik ist es eine Aufgabe der vorliegenden Erfindung, ein alternatives Verfahren der eingangs genannten Art zu schaffen, mit dem eine zuverlässige und preiswerte Regelung der Verbrennungsstabilität erzielt wird.

Zur Lösung dieser Aufgabe schafft die vorliegende Erfindung ein Verfahren der eingangs genannten Art, das dadurch gekennzeichnet ist, dass der Sollbereich der Bewertungsgröße über den gesamten Leistungsbereich der Maschine konstant ist. Auf diese Weise kann die Verbrennungsstabilität mit einfachen Mitteln basierend auf einer einzelnen Bewertungsgröße und damit über einen einzelnen Regelkreis über den gesamten Leistungsbereich der Maschine ohne konkurrierende Regelziele in einem sicheren Betriebsbereich gehalten werden.

Bevorzugt wird die Bewertungsgröße basierend auf gemessenen maximalen Ist-Amplituden in vorab definierten Frequenzbändern und gemessenen Ist-Leistungen der Brenneranordnung ermittelt.

Vorteilhaft wird die Bewertungsgröße unter Verwendung leistungsabhängiger Gewichtungsfaktoren und/oder frequenzabhängiger Gewichtungsfaktoren ermittelt.

Die leistungsabhängigen Gewichtungsfaktoren dienen dazu, den negativen Einfluss eines Frequenzbandes in Abhängigkeit von dem Leistungsbereich der Brenneranordnung zu definieren. So werden die leistungsabhängigen Gewichtungsfaktoren mit zunehmendem negativen Einfluss entweder höher oder niedriger gewählt. Frequenzbereiche, die in bestimmten Leistungsbereichen der Fahrkurve keinen negativen Einfluss auf die Verbrennungsstabilität haben, da in diesen keine für die Verbrennungsstabilität schädlichen maximalen Amplituden auftreten, können dank solcher leistungsabhängiger Gewichtungsfaktoren "ausgeschaltet" werden, so dass sie bei der Ermittlung der Bewertungsgröße nicht berücksichtigt werden. Auf diese Weise kann ein verfälschender Einfluss irrelevanter Frequenzbereiche auf die ermittelte Begleitungsgröße verhindert werden. Andere Frequenzbereiche, die in bestimmten Leistungsbereichen der Fahrkurve einen negativen Einfluss auf die Verbrennungsstabilität aufgrund schädlicher maximaler Amplituden entfalten, können in Abhängigkeit ihrer Relevanz für die einzelnen Leistungsbereiche separat gewichtet werden, so dass sie mehr oder weniger stark in die ermittelte Bewertungsgröße eingehen. Die leistungsabhängigen Gewichtungsfaktoren ermöglichen somit eine Bewertung über den gesamten Leistungsbereich der Maschine bzw. der Brenneranordnung.

Die frequenzabhängigen Gewichtungsfaktoren dienen dazu, den absoluten Beitrag der jeweiligen Frequenzbänder bzw. der maximalen Amplituden der jeweiligen Frequenzbänder zur Bewertungsgröße zu definieren. Hintergrund kann hier beispielsweise eine unterschiedliche Bedeutung der maximalen Amplituden der einzelnen Frequenzbänder auf die Verbrennungsstabilität sein. So können die frequenzabhängigen Gewichtungsfaktoren analog zu den leistungsabhängigen Gewichtungsfaktoren mit zunehmendem negativen Einfluss entweder höher oder niedriger gewählt werden. Mit anderen Worten können die frequenzabhängigen Gewichtungsfaktoren derart gewählt werden, dass die maximalen Amplituden der einzelnen Frequenzbänder hinsichtlich ihres negativen Einflusses auf die Verbrennungsstabilität auf ein vergleichbares Niveau gebracht werden, so dass sie entsprechend gewichtet in die ermittelte Bewertungsgröße eingehen. Auf diese Weise ist es möglich, den Sollbereich der Bewertungsgröße über den gesamten Leistungsbereich konstant zu halten.

Insbesondere ist die Bewertungsgröße definiert als die Summe $g_{f1} \cdot k_1 \cdot A_1^2 + g_{f2} \cdot k_2 \cdot A_2^2 + ... + g_{fn} \cdot k_n \cdot A_n^2$,

wobei $A_1$ bis

$A_n$ die maximalen Amplituden in den Frequenzbändern $f_1$ bis $f_n$, $g_{f1}$ bis $g_{fn}$ die leistungsabhängigen Gewichtungsfaktoren der Frequenzbänder $f_1$ bis $f_n$, und $k_1$ bis $k_n$ die frequenzbandabhängigen Gewichtungsfaktoren repräsentieren.

Vorteilhaft weisen die leistungsabhängigen Gewichtungsfaktoren $g_{f1}$ bis $g_{fn}$ einen Wert zwischen 0 und 1 auf. So können die Gewichtungsfaktoren $g_{fi}$ (mit i = 1 bis n) zum Beispiel abschnittsweise über der relativen Leistung der Brenneranordnung definiert werden. Beispielsweise kann der leistungsabhängige Gewichtungsfaktor $g_{fi}$ den Wert 0 erhalten, wenn $a < P^* \leq b$ ist, wobei $P^*$ die Ist-Leistung der Brenneranordnung repräsentiert, den Wert 0,5 wenn $c < P^* \leq d$ ist, und den Wert 1, wenn $e < P^* \leq f$ ist, wobei die Größen a, b, c, d, e und f die Leistungsbereiche kennzeichnen, in denen die jeweiligen Frequenzbänder einen Beitrag zur Bewertungsgröße liefern. Diese Werte variieren maschinenspezifisch und können von Fall zu Fall angepasst werden. Der jeweilige Wert der leistungsabhängigen Gewichtungsfaktoren $g_{fi}$, beispielsweise 0, 0,5 oder 1, kann ebenfalls maschinenspezifisch gewählt werden. Analog können den frequenzabhängigen Gewichtungsfaktoren $k_1$ bis $k_n$ Werte von 0 bis 1 zugeordnet werden.

Gemäß einer Ausgestaltung des erfindungsgemäßen Verfahrens handelt sich bei der wenigstens einen Stellgröße um den der Brenneranordnung zugeführten Gesamtbrennstoffvolumenstrom und/oder um den der Brenneranordnung zugeführten Gesamtverbrennungsluftvolumenstrom und/oder um eine Aufteilung des der Brenneranordnung zugeführten Gesamtbrennstoffvolumenstroms auf einzelne Brennerstufen der Brenneranordnung und/oder um die Positionierung verstellbarer Vorleitschaufeln der Brenneranordnung.

Der wesentliche Vorteil des erfindungsgemäßen Verfahrens gegenüber bekannten Verfahren, die kritische Frequenzbänder einzeln überwachen und beim Auftreten kritischer Frequenzen Stellgrößen verändern, um einen negativen Einfluss auf die Verbrennungsstabilität zu verhindern, besteht darin, dass miteinander konkurrierende Regelziele nicht auftreten können. Entsprechend ist stets eine ordnungsgemäße Funktionsweise sichergestellt. Darüber hinaus kann das erfindungsgemäße Verfahren mit einer einzigen Regelung einfach und preiswert realisiert werden.

**Patentansprüche**

1. Verfahren zum Betreiben einer Brenneranordnung, insbesondere einer Brenneranordnung einer Gasturbine, bei dem eine die Verbrennungsstabilität repräsentierenden Bewertungsgröße ermittelt und zumindest basierend auf der ermittelten Bewertungsgröße wenigstens eine Stellgröße verändert wird, wenn die ermittelte Bewertungsgröße nicht innerhalb eines vorab definierten Sollbereiches liegt, **dadurch gekennzeichnet, dass** der Sollbereich der Bewertungsgröße über den gesamten Leistungsbereich der Maschine konstant ist.

2. Verfahren nach Anspruch 1, **dadurch gekennzeichnet, dass** die Bewertungsgröße basierend auf gemessenen maximalen Ist-Amplituden in vorab definierten Frequenzbändern und gemessenen Ist-Leistungen der Brenneranordnung ermittelt wird.

3. Verfahren nach Anspruch 2, **dadurch gekennzeichnet, dass** die Bewertungsgröße unter Verwendung leistungsabhängiger Gewichtungsfaktoren und/oder frequenzabhängiger Gewichtungsfaktoren ermittelt wird.

4. Verfahren nach Anspruch 2 oder 3, **dadurch gekennzeichnet, dass** die Bewertungsgröße definiert ist als die Summe

$$g_{f1} \cdot k_1 \cdot A_1^2 + g_{f2} \cdot k_2 \cdot A_2^2 + \ldots + g_{fn} \cdot k_n \cdot A_n^2$$

wobei $A_1$ bis $A_n$ die maximalen Amplituden in den Frequenzbändern $f_1$ bis $f_n$, $g_{f1}$ bis $g_{fn}$ leistungsabhängige Gewichtungsfaktoren der Frequenzbänder $f_1$ bis $f_n$, und $k_1$ bis $k_n$ frequenzbandabhängige Gewichtungsfaktoren repräsentieren.

5. Verfahren nach Anspruch 4, **dadurch gekennzeichnet, dass** die leistungsabhängigen Gewichtungsfaktoren $g_{f1}$ bis $g_{fn}$ und/oder die frequenzabhängigen Gewichtsfaktoren $k_1$ bis $k_n$ einen Wert zwischen 0 und 1 aufweisen.

6. Verfahren nach einem der vorhergehenden Ansprüche, **dadurch gekennzeichnet, dass** es sich bei der wenigstens einen Stellgröße um den der Brenneranordnung zugeführten Gesamtbrennstoffvolumenstrom und/oder um den der Brenneranordnung zugeführten Gesamtverbrennungsluftvolumenstrom und/oder um eine Aufteilung des der Brenneranordnung zugeführten Gesamtbrennstoffvolumenstroms auf einzelne Brennerstufen der Brenneranordnung und/oder um die Positionierung verstellbarer Vorleitschaufeln der Brenneranordnung handelt.

Europäisches
Patentamt

European
Patent Office

Office européen
des brevets

**EUROPÄISCHER RECHERCHENBERICHT**

Nummer der Anmeldung

EP 14 16 6969

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2007 059701 A1 (GASWAERME INST E V [DE]) 18. Juni 2009 (2009-06-18) | 1,6 | INV. F23N5/16 |
| A | * Absatz [0026] * <br> * Absatz [0031] * <br> * Anspruch 1 * <br> ----- | 2-5 | F23N5/02 F02C9/28 F02C9/48 |
| A | EP 1 724 528 A1 (SIEMENS AG [DE]) 22. November 2006 (2006-11-22) * Abbildung 1 * ----- | 1-6 | |
| A | EP 1 348 908 A2 (ALSTOM SWITZERLAND LTD [CH] ALSTOM TECHNOLOGY LTD [CH]) 1. Oktober 2003 (2003-10-01) * das ganze Dokument * ----- | 1-6 | |

RECHERCHIERTE
SACHGEBIETE (IPC)

F23N
F23R
F02C

Der vorliegende Recherchenbericht wurde für alle Patentansprüche erstellt

| Recherchenort | Abschlußdatum der Recherche | Prüfer |
|---|---|---|
| München | 20. August 2014 | Christen, Jérôme |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes
     Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 16 6969

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-08-2014

| Im Recherchenbericht angeführtes Patentdokument | Datum der Veröffentlichung | Mitglied(er) der Patentfamilie | Datum der Veröffentlichung |
|---|---|---|---|
| DE 102007059701 A1 | 18-06-2009 | KEINE | |
| EP 1724528 A1 | 22-11-2006 | CA 2608042 A1<br>CN 101166935 A<br>EP 1724528 A1<br>EP 1880141 A1<br>JP 4806012 B2<br>JP 2008540911 A<br>US 2009301097 A1<br>WO 2006120206 A1 | 16-11-2006<br>23-04-2008<br>22-11-2006<br>23-01-2008<br>02-11-2011<br>20-11-2008<br>10-12-2009<br>16-11-2006 |
| EP 1348908 A2 | 01-10-2003 | DE 10213682 A1<br>EP 1348908 A2<br>US 2003211432 A1 | 09-10-2003<br>01-10-2003<br>13-11-2003 |

EPO FORM P0461

Für nähere Einzelheiten zu diesem Anhang : siehe Amtsblatt des Europäischen Patentamts, Nr.12/82